Europäisches Patentamt

European Patent Office

Office européen des brevets

(19)

(11) Veröffentlichungsnummer: **0 306 665 B1**

# EUROPÄISCHE PATENTSCHRIFT

(45) Veröffentlichungstag der Patentschrift: **16.12.92**

(51) Int. Cl.⁵: **B65D  35/46**

(21) Anmeldenummer: **88111316.1**

(22) Anmeldetag: **06.06.84**

(60) Veröffentlichungsnummer der früheren Anmeldung nach Art. 76 EPÜ: **0 128 525**

(54) **Auslaufsperre für Behälter, insbesondere für Tuben, und Anwendungen.**

(30) Priorität: **07.06.83 DE 3320482**
**14.07.83 DE 3327852**
**27.07.83 DE 3327853**
**25.01.84 DE 3402478**

(43) Veröffentlichungstag der Anmeldung:
**15.03.89 Patentblatt  89/11**

(45) Bekanntmachung des Hinweises auf die Patenterteilung:
**16.12.92 Patentblatt  92/51**

(84) Benannte Vertragsstaaten:
**AT BE CH DE FR GB IT LI LU NL SE**

(56) Entgegenhaltungen:
**DE-A- 2 128 875**
**FR-A- 2 508 008**
**US-A- 3 669 323**
**US-A- 3 674 183**
**US-A- 4 133 457**

(73) Patentinhaber: **UHU GmbH**
**Hermannstrasse 7**
**W-7580 Bühl (Baden)(DE)**

(72) Erfinder: **Flier, Gustav**
**Kloster-Lorsch-Weg 22**
**W-7407 Rottenburg 15(DE)**

(74) Vertreter: **Dr. Elisabeth Jung Dr. Jürgen Schir-**
**dewahn Dipl.-Ing. Claus Gernhardt**
**P.O. Box 40 14 68 Clemensstrasse 30**
**W-8000 München 40(DE)**

EP 0 306 665 B1

## Beschreibung

Die Erfindung bezieht sich auf eine Auslaufsperre für Behälter, insbesondere für Tuben, wie im oberbegriff des Anspruchs 1 angegeben ist, und auf Anwendungen.

Eine solche Auslaufsperre dient vornehmlich dazu, bei dem Entnehmen von Füllgut aus einer Entnahmeöffnung des Behälters einem Nachfließen des Füllgutes vorzubeugen. Es werden also insbesondere solche Behälter in Betracht gezogen, bei denen das Füllgut fließfähig oder sonst auslauffähig ist. Derartige Füllgüter können beispielsweie flüssig oder halbflüssig sein; es kann sich aber beispielsweise auch um fließfähige Pulver und andere Füllgüter mit vergleichbaren Eigenschaften handeln. Vorzugsweise erfolgt Anwendung für dünnflüssige Füllgüter, z.B. Klebstoff, Zahncreme oder Shampoon. Bei Abfüllen flüssiger oder halbflüssiger Produkte in Tuben ist es z.B. durch den Abfüll- und den anschließenden Verschließvorgang meist unvermeidlich, daß eine kleine Luftblase mit eingeschlossen wird. Wenn der Tubeninhalt ein Lösungsmittel enthält, kommt es zur Ausgasung von Lösungsmitteldampf in die Luftblase. Allgemein kann sich eine Luft-, Gas- und/oder Dampfblase aufbauen, deren Druck der Summe aller Partialdrücke aller flüchtigen Gas- und Dampfbestandteile innerhalb der Tube entspricht. Dieser Druck läßt schon beim Öffnen der Tube Tubeninhalt ungewollt ausfließen und dann lästig nachfließen. Handwärme beim Gebrauch der Tube sowie eine warme Lagertemperatur unterstützen diese Vorgänge. Es kann aber auch aus anderen Gründen zu einem Auslaufen kommen, und sei es nur unter der Schwerkraft.

Einem solchen Auslaufen kann man entgegenwirken, wenn man den Behälterraum in eine mit einer Entnahmeöffnung des Behälters kommunizierende Vorkammer und eine eigentliche Vorratskammer durch eine Zwischenwand unterteilt, die nach der Füllgutentnahme ein Nachlaufen des Füllguts aus der Vorratskammer in die Vorkammer entweder ganz sperrt oder wenigstens drosselt. In einem Grenzfall kann man dabei die Vorkammer sogar als Dosierkammer für durch die Vorkammer quantitativ abgemessenes Füllgut verwenden. Der mit der Erfindung jedoch überwiegend angesprochene Fall ist der, daß die Entnahme des Füllgutes von Stärke und Dauer eines auf das in der Vorratskammer befindliche Füllgut ausgeübten Entnahmedruckes abhängt und sich dabei eine kontinuierliche Füllgutsäule von der Vorratskammer über die Vorkammer bis in die Entnahmeöffnung erstreckt. Bei Aufhebung des Betätigungsdruckes hemmt oder verhindert dann die in der Zwischenwand vorgesehene Verbindungseinrichtung zwischen Vorratskammer und Vorkammer einen Nachtransport von Füllgut aus der Vorratskammer in die Vorkammer zur Entnahmeöffnung.

Als Behälter kommen vorzugsweise die schon beispielhaft genannten Tuben in Frage, bei denen die Füllgutentnahme durch Druck auf den Tubenkörper erfolgt. Neben den vor allem angesprochenen üblichen Quetschtuben kommen dabei auch solche Tuben in Frage, bei denen sich der Tubenkörper nach Druckausübung mehr oder minder elastisch wieder in eine Grundform zurückstellt. Es kommen aber auch andere gleichwirkende Behälter in Frage, z.B. solche, bei denen auf die Vorratskammer ein Betätigungsdruck über einen Betätigungskolben, eine Betätigungspneumatik oder vergleichbare Druck ausübende Betätigungsmittel ausgeübt wird.

Wenn die Vorkammer nicht wie in dem genannten Grenzfall als Dosierkammer verwendet wird, sondern wenn im Sinne des Hauptzwecks von Einrichtungen der hier beschriebenen Art in erster Linie einem Auslaufen oder Nachfließen von Füllgut entgegengewirkt wird, welches sich in einer mehr oder minder geschlossenen Säule von der Behälteröffnung durch die Vorkammer in die Vorratskammer erstreckt, hat eine solche hemmende oder gänzlich sperrende Auslaufsperre immer noch den Charakter einer Dosierhilfe.

Im Rahmen der Erfindung kann die Behälteröffnung in einem Grenzfall ständig offen sein, wenn dies während der Gebrauchszeit des Behälters zu keiner wesentlichen Füllgutverschlechterung führt. Meist wird die Behälteröffnung mit einem lösbaren und zweckmäßigerweise wiederverwendbaren Verschluß, z.B. bei Tuben mit einer üblichen Tubenkappe, versehen sein. In einem anderen weniger bevorzugten, jedoch auch möglichen Grenzfall kann die Behälteröffnung mit einem selbsttätigen Behälterverschluß, z.B. einem druckbetätigten Verschluß für Tuben und elastische Behälter gemäß DE-A-27 04 164 oder einem Tubenverschluß gemäß DE-A-23 41 934, versehen sein. Es gibt eine Vielzahl anderer selbsttätiger Tubenverschlüsse. Derartige selbsttätige Tubenverschlüsse, welche die eigentliche Behälteröffnung bei Nichtgebrauch des Behälters verschließen, sind nicht Gegenstand der Erfindung.

Gegenstand der Erfindung ist vielmehr die Ausbildung und Anordnung der Zwischenwand, welche die mit einer Entnahmeöffnung des Behälters versehene Vorkammer von einer Vorratskammer unterteilt, in ihrer Funktion als teilweise oder völlige Auslaufsperre. Der Entnahmedruck pflanzt sich dabei, meist über das Füllgut selbst, von der Vorratskammer über die Zwischenwand auf das in der Vorkammer befindliche Füllgut fort.

Insbesondere bei Verwendung eines selbsttätigen Tubenverschlusses, aber auch sonst, ist es dabei an sich bekannt (vgl. z.B. DE-U-19 24 355 und DE-U-72 23 144 sowie GB-A-724 798), in der Zwischenwand ständig offene Drosselöffnungen vorzusehen. Hierbei besteht jedoch ein Zielkonflikt zwischen einem möglichst ungehinderten Durchgang von der Vorratskammer zur Vorkammer bei der Entnahme und einer möglichst starken Drosselung während der Zeiten, in denen keine Entnahme erfolgt.

Dieser Zielkonflikt tritt nicht mehr auf, wenn die Zwischenwand mit einer Ventileinrichtung, insbesondere einer Einwegventileinrichtung von Vorratskammer zu Vorkammer, versehen ist, welche bei Druckbeaufschlagung auf das Füllgut in der Vorkammer einen hinreichend großen Durchlaßquerschnitt öffnet und bei Aufhebung des Entnahmedrucks vorzugsweise ganz oder wenigstens doch partiell wieder schließt. Die Erfindung befaßt sich mit der Problematik derartiger als Auslaufsperre wirkender Zwischenwände mit Ventileinrichtung. Es ist dabei nicht ausgeschlossen, daß in der Zwischenwand zusätzlich zur Ventileinrichtung noch ein ständig freier Öffnungsquerschnitt verbleibt, um dabei z.B. einen Druckausgleich unterschiedlicher Partialdrücke in Vorratskammer und Vorkammer, z.B. unterschiedlicher Lösungsmitteldampfdrücke, zu ermöglichen. Ein derartiger zusätzlicher Öffnungsquerschnitt ist dann jedoch zweckmäßig stark drosselnd ausgebildet (DE-U-82 30 181, Anspruch 10).

Ventileinrichtungen einer Zwischenwand können grundsätzlich jeden funktionell in Frage kommenden bekannten Ventilaufbau haben. Die Erfindung befaßt sich dabei mit dem Sonderfall, daß eine mehr oder minder elastische selbsttätige Rückstellkraft des Ventilorgans vom Spannungszustand eines Membranabschnittes abhängt, der Bestandteil der Zwischenwand ist. Derartige bekannte Konstruktionen zerfallen in zwei Klassen. Bei der einen Klasse (US-A-3 081 006 = DE-B-12 12 862, US-A-3 179 299 und DE-C-17 86 644) ist die Zwischenwand integraler Bestandteil des Behälterkörpers. Bei der anderen Klasse (das schon erwähnte DE-U-82 30 181 sowie DE-U-72 41 840, US-A-1 122 868 und FR-A-1 519 814) ist die Zwischenwand ein nachträglich in den Behälterkörper eingebrachtes Einsatzstück. Die Erfindung befaßt sich vornehmlich, jedoch nicht ausschließlich, mit der Ausbildung der Zwischenwand als Einsatzstück. Dieses Einsatzstück kann mit dem Behälter durch lose Anlage verbunden sein, z.B. unter dem Druck des Füllgutes der Vorratskammer in Anlage an eine Behälterschulter. Bevorzugter sind jedoch dauerhaftere Verbindungen, z.B. durch Einklemmen unter Vorspannung oder gar durch dauerhafteres Verbinden, etwa mittels eines Klebemittels. Von besonderem Interesse ist dabei die Möglichkeit der Einklemmung unter Vorspannung, ohne dabei die anderen Verbindungsarten ausschließen zu wollen.

Es gibt eine Vielzahl von Anordnungen und Formen in Frage kommender Ventilöffnungen des Membranabschnittes der Zwischenwand. Nach der US-A-3 179 299 kann der Membranabschnitt eine Mehrzahl von kleinen Durchgangsöffnungen aufweisen, die sich bei Druck von seiten der Vorratskammer aufweiten, wobei die Zwischenwand als Rücksaugsperre für Luft aus der Vorkammer in die Vorratskammer dient. Es kann der ganze Membranabschnitt als Klappenventil dienen (DE-C-17 86 644). Es kann der Membranabschnitt mit einem gesonderten, z.B. klappenartigen, Ventilorgan zusammenwirken (US-A-3 081 006 = DE-B-12 12 862). Insbesondere, jedoch nicht ausschließlich, richtet sich das Interesse der Erfindung auf solche Ventilöffnungen, welche einfach durch Schlitzung des Membranabschnittes gewonnen werden.

Die bekannten Anordnungen von Ventilschlitzen zerfallen dabei wiederum in zwei Klassen. Bei der ersten Klasse sind die Ventilschlitze zentral in der Zwischenwand angeordnet, z.B. als Einfachschlitz, Y-Schlitz, Kreuzschlitz, Winkelschlitz oder nur über einen kurzen Umfangsbereich unterbrochener Kreisschlitz (DE-U-72 41 840 und 82 30 181 sowie FR-A-1 519 814 und US-A-1 122 868, Fig. 1 bis 4). Bei der zweiten Klasse sind die Ventilschlitze zentrumsfern nahe des Umfangs des Membranabschnittes (im folgenden "peripher" genannt) angeordnet, z.B. fast halbkreisförmig jeweils zur Bildung eines Ventillappens (gemäß US-A-1 122 868, Fig. 5). Die Erfindung befaßt sich vorzugsweise, jedoch nicht ausschließlich mit dieser zweitgenannten Klasse.

Nun erweist es sich, daß, insbesondere bei der Massenfertigung mit ihrer hohen Produktionsgeschwindigkeit, einerseits solche Einsatzstücke, welche die Zwischenwand mit ihrem Membranabschnitt bilden, und andererseits die Behälter mit erheblichen Toleranzen vorliegen.

So ist die Erfindung unter anderem besonders vorgesehen für Aluminiumtuben, die heutzutage in Produktionsgeschwindigkeiten von 100 bis 180 Tuben pro Minute hergestellt werden. Aluminiumtuben werden heutzutage durch Fließpressen hergestellt, wobei Toleranzen beispielsweise durch Verschleiß in den Werkzeugen entstehen. Die den Membranabschnitt aufweisenden Einsatzstücke werden zweckmäßig aus Kunststoff, vorzugsweise einer gegen Lösungsmittel, z.B. von Klebstoffen, unempfindlichen Art, wie Polypropylen oder einem anderen vergleichbaren Kunststoff, hergestellt. Hierbei kommt es zu Herstellungstoleranzen sowohl vom Spritzwerkzeug her wie von der Materialseite. Da die Verbindung von Zwischenwand und Behälter ganz oder überwiegend dicht sein soll, kommt es dabei leicht zu unerwünschten Rückwirkungen der Verbindungsbedingungen von Zwischenwand und Behälter auf die Ventilöffnung. So kann ein auf der Zwischenwand ausgebildeter Halteteil, der, beispielsweise klemmend, zur Verbindung mit dem Behälter dient, unerwünschte Spannungen auf den mit der Ventilöffnung oder den Ventilöffnungen versehenen Membranbereich ausüben und so die Ventilfunktion in unerwünschter Weise beeinflussen. Vergleichbares gilt selbst dann, wenn die Zwischenwand integral mit dem Behälter ausgebildet ist, da sich auch dann Toleranzen des Behälters im Großen unerwünscht auf die möglichst genau einzustellende Ventilöffnung im Membranabschnitt der Zwischenwand auswirken können.

Die Erfindung geht gattungsgemäß (mit den Merkmalen des Oberbegriffs von Anspruch 1) von einem Stand der Technik gemäß dem Ausführunsbeispiel der Fig. 8 und 9 der US-A-4 133 457 aus. Diese zeigt eine als Flüssigkeitsspender dienende Flasche aus flexiblem, nachgiebigem Material. Die Zwischenwand zwischen Vorkammer und Vorratskammer ist von einem einstückigen Einsatzteil gebildet, welches mit einem äußeren flachen Ringflansch zwischen einer flachen Schulter eines auf den Behälter aufschraubbaren Mundstücks des Behälters und dessen stirnseitig offener Stirnfläche eingespannt wird. Der Ringflansch bildet dabei ein Halteteil, das unter Ausgleich von Toleranzen mit dem Behälter verbindbar ist. In den von dem Halteteil umgebenen zentralen Bereich des Einsatzteils ragt eine konisch zulaufende Fassung, die mit der Flaschenachse koaxial angeordnet ist, in den Vorratsraum und spannt einen somit vom Halteteil getragenen Membranabschnitt auf, in welchem sich zwei Schlitze axial versetzt kreuzen. Der eine im axialen Bereich liegende spitzwinklige Abschnitt des Membranabschnitts zwischen den beiden sich kreuzenden Schlitzen dient dabei als klappenartig ausbiegbarer dreieckiger Ventillappen. Dabei wird eine bei Druckentlastung auf das Füllgut wirksame Auslaufsperre der erörterten Art geschaffen, welche in einer für Massenfertigung geeigneten Weise die Spannungsbedingungen ihrer Ventilöffnung im Membranabschnitt von den Bedingungen der Verbindung der Zwischenwand mit dem Behälter entkoppelt. Dabei wird auch der Membranabschnitt von der Fassung ohne wirksamen Einfluß von Spannungseinflüssen aus Toleranzen des Behälterkörpers so gehalten, daß die Ventilöffnung im ungespannten Zustand, bei dem das Füllgut druckentlastet ist, optimal geschlossen ist. In Ausnahmefällen kann man auch daran denken, für die Ventilfunktion besonders gewünschte Spannungsbedingungen in den Membranabschnitt einzuprägen, wobei dann diese Spannungsbedingungen von den Bedingungen der Verbindung von Zwischenwand und Behälter möglichst unberührt sein sollen.

Bei der gattungsgemäßen Auslaufsperre sorgt somit die relativ zum Membranabschnitt und zweckmäßig auch relativ zum Halteteil der Zwischenwand relativ formsteife Fassung des Membranabschnittes dafür, daß dieser den gewünschten Spannungszustand, vorzugsweise die Spannungslosigkeit, unabhängig davon gewährleistet, wie die Bedingungen der Verbindung von Zwischenwand und Behälter sind. An diese Verbindungsbedingungen paßt sich der Halteteil an, welcher die Fassung trägt. Dabei kompensiert die formsteife Fassung zumindest teilweise auch die Rückwirkung von Klemmspannungen, die beim Einspannen des als Halteteil dienenden Ringflansches entstehen, etwa durch Kompression des Ringflanschmaterials, und sich radial nach innen fortpflanzen.

Um die gleichmäßigen Spannungsbedingungen des Membranabschnittes nutzbar zu machen, kann an sich die Ventilöffnung oder eine Mehrzahl von Ventilöffnungen in beliebig bekannter Weise ausgebildet und angeordnet sein. Die bei der gattungsgemäßen US-A-4 133 457 gewählte Ventilausbildung ist dabei insofern ungünstig, als sie auf die Ausbiegbarkeit eines Lappens des Membranabschnittes abstellt. Das kann relativ früh zu Materialermüdung und unbefriedigender Schließfunktion führen und setzt für eine ausreichende Rückstellkraft eine relativ große Membranwandstärke voraus. Die Erfindung befaßt sich stattdessen mit einer Anordnung peripherer Ventilschlitze. Bisher (vgl. FR-A-2 508 008, Fig. 12) hat man dabei lediglich ein Paar sich gegenüberliegender peripherer Ventilschlitze so als Kreisabschnitte mit einer Erstreckung um weniger als 180° ausgebildet, daß ein kreissegmentförmiger Lappen um die Verbindungslinie der Enden des jeweiligen Kreisabschnittes ausklappen kann. Auch diese Klappenfunktion macht eine relativ dickwandige Ausbildung der radial weiter innen liegenden Bereiche des Membranabschnittes erforderlich, wenn man nennenswerte Rückstellkräfte erzeugen will. Es ist dabei auch als nachteilig anzusehen, daß die Scharnierlinie der Klappe im an sich eher elastischen radial inneren Bereich des Membranabschnittes liegt. Überhaupt ist die Dauerbelastbarkeit einer derartigen Membranklappe beschränkt.

Der Erfindung liegt demgegenüber die Aufgabe zugrunde, bei einer gattungsgemäßen Auslaufsperre, bei der die Einspannbedingungen des Membranabschnitts von den Einsetzbedingungen des Einsatzteils im Behälter durch die den Membranabschnitt umgebende Fassung entkoppelt sind, bei guter Schließfunktion und Dauerbelastbarkeit der Ventilfunktion des Membranabschnitts dessen Rückfederungsverhalten und eine Ventilschieberwirkung an den in peripherer Anordnung angebrachten Dosierschlitz zu verbessern.

Hierzu wird nach der Erfindung vorgesehen, daß mindestens ein, vorzugsweise mehrere, periphere(r) Ventilschlitz(e) längs der Fassung verläuft bzw. verlaufen, daß der Membranabschnitt nur längs eines relativ kurzen Umfangsabschnitts direkt mit der Fassung und über den übrigen Umfang mit einer balgförmigen Anformung der Fassung verbunden ist, und daß der Ventilschlitz oder mehrere Ventilschlitze nur in dem Bereich direkter Verbindung des Membranabschnitts mit der Fassung angeordnet ist bzw. sind.

Der Verlauf der Ventilschlitze längs der Fassung stellt sicher, daß der der Fassung benachbarte Bereich des jeweiligen Ventilschlitzes mehr oder minder ortsfest gehalten ist, während sich der radial innen liegende Rand des Ventilschlitzes unter Materialverformung der nicht geschlitzten Randzone des Membranabschnittes nach Art eines Ventilschiebers, dessen Funktion durch eine Verstärkung des Membranabschnitts zu seinem Zentrum hin noch verstärkt werden kann, unter Materialverformung etwa in Achsrichtung der Fassung verschieben kann.

Dadurch, daß die Gegendruckmembrane in asymmetrischer Lage nur über ein kurzes Stück ihres Umfangs mit der Einfassung direkt und über den Rest ihres Umfangs mit einer balgförmigen Ausformung der Einfassung verbunden ist, wird erreicht, daß die vom Membranabschnitt gebildete Gegendruckmembran bei Druck über den Tubeninhalt bei geöffneter Tube eine Kippbewegung in Richtung Tubenöffnung ausführt, deren Drehachse in das kurze, direkte Verbindungsstück zwischen Einfassung und Gegendruckmembran fällt. Dadurch öffnet sich der dort plazierte Dozierschlitz leicht, um sich bei Nachlassen des Drucks sofort und sicher wieder zu schließen.

Wenn bei einem Membranabschnitt ein Radius definiert werden kann, was bei üblichen runden oder ovalen oder ähnlichen Konfigurationen der Fall ist, verläuft der jeweilige Ventilschlitz bzw. verlaufen die jeweiligen Ventilschlitze zweckmäßig rechtwinklig zum Radius des Membranabschnittes. Daraus folgt dann auch für den erwähnten Fall, bei dem sich der jeweilige Ventilschlitz längs der Fassung erstreckt, daß auch die Fassung ganz oder im wesentlichen rechtwinklig zum Radius verläuft.

Hiermit werden nicht nur die Nachteile der bekannten ventilklappenartigen Schlitzkonfigurationen vermieden, sondern auch die Nachteile von radialen Ventilschlitzen. Versuche mit radial geschlitzten Ventilmembranen aus elastischem Material, die randdicht in Tuben vor deren jeweiligem Tubenkonus liegen, zeigen nämlich, daß solche Ventilmembranen nur relativ unzureichend ein Dosieren ermöglichen und ein Nachfließen unterbinden. Der Grund liegt in weniger genügendem Rückfederungsverhalten solcher Art gestalteter Ventilmembranen, insbesondere wenn man die Zwischenwände herstellt als kostengünstige Spritzteile aus einem lösungsmittelbeständigen Kunststoff wie z.B. aus Polypropylen für Klebstoffe. Bei der erwähnten erfindungsgemäßen Konfiguration mit peripherem, rechtwinklig zum Radius verlaufendem jeweiligem Ventilschlitz längs der Fassung wird demgegenüber das zur exakten Dosierung und zur Unterbindung eines Nachfließens notwendige aufzubringende Rückfederungsverhalten durch die Fassung als Träger des Membranabschnittes aufgebracht, um ein schnelles Öffnen und Schließen der Ventilschlitze sicherzustellen. Im Gegensatz zu radial geschlitzten Membranen, die gleichzeitig auch eine ähnliche Funktion wie Ventilklappen übernehmen, übernimmt die bis zu ihrer Peripherie geschlossene und gegebenenfalls zur Mitte hin verstärkte Gegendruckmembran im Rahmen der Erfindung die Funktion eines Ventilschiebers, der exakt bei einem bestimmten Gegendruck die Ventilschlitze leicht öffnen läßt und diese bei Nachlassen des Drucks sofort wieder schließen läßt. Dabei trägt die Fassung dazu bei, daß die Vorgänge des Schließens und Öffnens weitgehend unabhängig sind von einer Vorspannung zwischen einem z.B. als Tubeneinsatzhaltekragen ausgebildeten Halteteil und dem Behälter, hier der Tube. Eine solche Vorspannung des Halteteils ist bei Ausbildung der Zwischenwand als Tubeneinsatz in der Tube für eine sichere Halterung bei Transport und Lagerung erforderlich, ohne daß eine derartige Vorspannung im allgemeinen im Bereich der Ventilöffnungen, hier der speziell geformten und angeordneten Ventilschlitze, erwünscht ist.

Um einen solchen Tubeneinsatz ohne Beschädigung der Tube in diese einzubringen, erfolgt das Einführen des Tubeneinsatzes zweckmäßig in einer Schräglage zur Tubendurchmesserebene, und der Tubeneinsatz wird erst an der Behälterschulter des vorderen Tubenkonus eben an diesen dicht fest angedrückt.

Die erwähnte Ventilschieberwirkung tritt bereits in einem merklichen Umfang auf, wenn der erwähnte bevorzugte periphere Ventilschlitz, der zweckmäßig längs der Fassung und radial zum Membranabschnitt verläuft, bzw. entsprechende Ventilschlitze noch etwas Abstand zur Fassung hat bzw. haben. Denn auch dann bewegen sich die innenliegenden Bereiche des Membranabschnitts ventilschieberartig weiter in Achsrichtung des Membranabschnittes als die von der Fassung festgehaltenen peripheren Restabschnitte. Eine optimale Ventilschieberwirkung erhält man dabei an sich, wenn mehrere derartige periphere Schlitze gleichmäßig längs der Fassung verteilt sind; aber selbst bei einem nach der Erfindung etwa vorgesehenen einzelnen Ventilschlitz erhält man schon eine ähnliche Wirkung.

Diese Wirkung kann man noch verstärken, wenn der Außenrand des betreffenden Ventilschlitzes oder der entsprechenden Ventilschlitze am Innenrand der Fassung angeordnet ist, da dann der Außenrand des betreffenden Ventilschlitzes sich nicht mehr axial gegenüber der Fassung ausbiegt und somit die Ventilschieberwirkung des mit dem Innenrand des betreffenden Ventilschlitzes verbundenen Bereichs des Membranabschnittes optimal wird.

In bestimmten Fällen kann es ausreichen, wenn die Fassung den membranförmigen Abschnitt der Zwischenwand nicht vollständig umfaßt. Vorzugsweise ist die Fassung jedoch ringförmig ausgebildet. Mit "ringförmig" ist dabei in erster Linie eine ringsum verlaufende Fassung ohne Beschränkung auf eine bestimmte Form angesprochen, in zweiter, bevorzugter, Linie eine kreisringförmige Form. Bewährt hat sich die Ausbildung als Zylinder oder eine andere in Achsrichtung der Fassung langgestreckte Form. Hierdurch läßt sich besonders gut in demselben Material der Zwischenwand, welches den mehr oder minder elastisch-nachgiebigen Membranabschnitt bildet, die Formsteifigkeit der Fassung gewährleisten. Überhaupt ist vorzugsweise vorgesehen, daß alle Elemente der Zwischenwand einstückig aus demselben Material, wie bereits dem genannten Polypropylen, gebildet sind.

Man könnte daran denken, den Membranabschnitt in einem mittleren Bereich der Länge einer solchen langgestreckten Fassung anzubringen, z.B. im Zentrum auf halber Länge. Eine solche Anordnung kann bei geringer Wandstärke der Fassung zum Gewährleisten einer maximalen Formsteifigkeit nützlich sein. Aus Gründen vereinfachter Massenfertigung und anderen Gründen ist es jedoch bevorzugt, daß der Membranabschnitt an einer Stirnseite der langgestreckt ausgebildeten Fassung angeordnet ist. Zu den anderen Gründen kann auch die dabei besonders günstige elastische Ausspannung des Membranabschnittes gerechnet werden, da hier der Membranabschnitt nach Art einer Trommelbespannung aufgespannt ist. Obwohl dabei die Fassung über längere Zeiträume betrachtet formstabil ist, kann sie zugleich noch so viel Elastizität haben, daß sie die elastischen Eigenschaften des Membranabschnittes mit bestimmt.

Wenn, wie bei Ausbildung der Zwischenwand als Einsatzstück weit verbreitet, die Zwischenwand an einer Behälterschulter angeordnet ist (vgl. z.B. US-A-1 122 868 oder DE-U-82 30 181), ist zweckmäßig die mit dem Membranabschnitt versehene Stirnseite einer langgestreckt ausgebildeten Fassung der Behälterschulter abgewandt.

Als Halteteil kann jedes die Fassung tragende und an der Zwischenwand ausgebildete Teil dienen, welches in dem von der Zwischenwand eingenommenen Behälterinnenquerschnitt auftretende Toleranzen sowie für den Fall, daß die Zwischenwand als Einsatzstück ausgebildet ist, auch Toleranzen des Einsatzstückes ausgleicht. Im Grenzfall kann dabei das Halteteil sogar Element der Fassung sein, sofern diese sowohl die Einspannfunktion als auch die Toleranzen ausgleichende Haltefunktion zu erfüllen in der Lage ist. Im Normalfall wird das Halteteil ein gesondertes Element sein.

Zum Beispiel für klemmende Ausbildung des Halteteils an einer als Einsatzstück dienenden Zwischenwand ist das Halteteil zweckmäßig als Ringkragen ausgebildet. Dieser kann zweckmäßig eine Ringscheibe mit einem abgewinkelten Halteflansch sein. Für den bereits erwähnten häufigen Fall, daß dabei das Einsatzstück an einer Behälterschulter abgestützt ist und diese Behälterschulter nach Art einer Tubenschulter schräg ausgebildet ist, ist dann vorzugsweise vorgesehen, daß auch die Ringscheibe in Anpassung an die schräge Behälterschulter schräg ausgebildet ist. Um allgemein das Halteteil eng an der Behälterschulter anbringen zu können, ist zweckmäßig ferner vorgesehen, daß der Halteflansch von der betreffenden Behälterschulter fortweist. Wenn man schließlich die Elemente des Halteteils relativ wandstark ausbilden will, trotzdem jedoch eine elastische Anpassung an unter Toleranzen bedingte unterschiedliche Innenquerschnitte des Behälters sicherstellen möchte, sieht man zweckmäßig in dem Halteteil eine entsprechende elastisch-nachgiebige Ringzone vor. Diese kann durch Materialschwächung in einem elastisch-nachgiebigen Grundmaterial der Zwischenwand gewonnen sein. Eine bevorzugte Ausführungsform ist dabei die, daß die innere Übergangsfläche der Ringscheibe in den Halteflansch unter Bildung einer ringförmigen geschwächten Zone von radial innen nach radial außen geknickt verläuft.

Es ist nicht erforderlich, daß der Membranabschnitt eine Gegendruckmembran konstanter Stärke bildet. So kann der Membranabschnitt jeweils eine gegen den Ventilschlitz auslaufende Versteifungsrippe bilden, die zweckmäßig radial verläuft. Entsprechendes gilt für mehrere Versteifungsrippen. Auch kann der Membranabschnitt zu seinem Zentrum hin verstärkt ausgebildet sein. Dabei kann man die Verstärkung an der Versteifungsrippe oder den Versteifungsrippen ausbilden. Für die Steuerung der Ventilöffnung(en) ist es dabei zweckmäßig, wenn die Versteifungsrippe bzw. die Versteifungsrippen und/oder die Verstärkung auf der der Vorratskammer abgewandten Seite ausgebildet ist bzw. sind.

Die Öffnungssteuerung des Ventilschlitzes kann noch verbessert werden, wenn die Schnittfläche des Ventilschlitzes oder der betreffenden Ventilschlitze schräg zur Achse der Fassung verläuft. Der Verformungskinematik entspricht es dabei am besten, wenn die Schnittfläche einen Neigungswinkel in Richtung Tubeneinsatzmitte besitzt und dabei der jeweilige Ventilschlitz an der der Vorkammer zugewandten Seite des Membranabschnittes achsferner als an der der Vorratskammer zugewandten Seite des Membranabschnittes angeordnet ist.

Die Erfindung wird im folgenden anhand schematischer Zeichnungen an mehreren Ausführungsbeispielen noch näher erläutert. Es zeigen:

Fig. 1 einen die Tubenachse enthaltenden Querschnitt durch den abgebrochen dargestellten vorderen Teil einer Tube mit eingebauter Auslaufsperre;

Fig. 2 einen Teilquerschnitt gemäß Fig. 1 in vergrößertem Maßstab der Auslaufsperre mit schraffiert dargestellter Ruhestellung und im Umriß dargestellter Entnahmestellung des Membranabschnittes der Auslaufsperre;

Fig. 3      eine Draufsicht von vorne auf die Auslaufsperre gemäß den Fig. 1 und 2;

Fig. 4A     einen in der Schnittführung Fig. 1 entsprechenden Teilquerschnitt durch eine abgewendelte Auslaufsperre;

Fig. 4B     eine Draufsicht von vorne auf die Auslaufsperre gemäß Fig. 4A;

Fig. 5A     einen in der Schnittführung Fig. 1 entsprechenden Teilquerschnitt durch eine weitere Auslaufsperre;

Fig. 5B     eine Draufsicht von vorne auf die Auslaufsperre gemäß Fig. 5A;

Fig. 6      einen der Schnittführung von Fig. 1 entsprechenden Teilquerschnitt in vergrößertem Maßstab durch eine Auslaufsperre unter Fortlassung der Ventilöffnung(en), insbesondere gemäß Fig. 4A oder Fig. 4B;

Fig. 7      einen in der Schnittführung Fig. 1 entsprechenden Teilquerschnitt durch den abgebrochen dargestellten vorderen Teil einer Tube mit noch einer anderen Art einer eingebauten Auslaufsperre; und

Fig. 8      den Querschnitt der Auslaufsperre gemäß Fig. 7 in vergrößertem Maßstab.

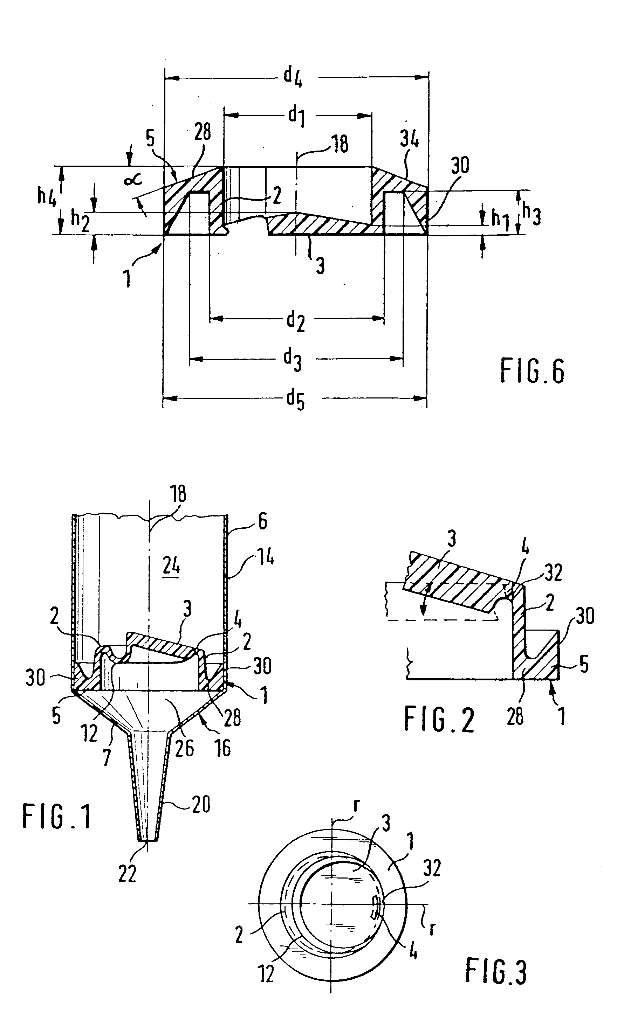

In den Fig. 4A bis 8 ist die in den Fig. 1 bis 3 vorgesehene balgartige Anformung der Fassung der Auslaufsperre zeichnerisch nicht dargestellt, jedoch ergänzt zu denken.

Als Behälter ist bei allen Ausführungsbeispielen ohne Beschränkung der Allgemeinheit eine Tube 6, insbesondere Quetschtube, dargestellt. Es handelt sich dabei insbesondere um eine Aluminiumtube. Diese hat einen im ungequetschten Zustand zylindrischen Hauptkörper 14, der aber auch in abgewandelter, nicht dargestellter Weise von vornherein abgeflacht ausgebildet sein kann. Der Hauptkörper 14 ist an seinem Ende in bekannter Weise, beispielsweise durch einen Verschlußfalz, verschließbar, was nicht im einzelnen dargestellt ist. An seinem vorderen Ende geht der Hauptkörper 14 über ein konisches Übergangsstück 16 in einen mit der Achse 18 des Hauptkörpers 14 koaxialen Nippel 20 über, der sich tüllenartig leicht verjüngt und an seinem vorderen Ende die Entnahmeöffnung 22 des Behälters aufweist. Die Entnahmeöffnung 22 kann in nicht dargestellter bekannter Weise durch ein eigenes Verschlußorgan verschließbar sein, insbesondere durch eine auf den Nippel 20 aufsteckbare oder aufschraubbare Verschlußhülse. Das konische Übergangsstück 16 ist auch koaxial mit der Achse 18, die somit zugleich die Behälterachse ist, und bildet im vorderen Anschluß an den Hauptkörper 14 eine diesen bis auf den Übergang in den Nippel 20 vorne abschließende Behälterschulter 7, welche mit dem Querschnitt des Hauptkörpers 14 an dessen vorderer Stirnseite einen spitzen Winkel von z.B. 27° einschließt.

Im Bereich dieses stirnseitigen Querschnitts des Hauptkörpers 14 und damit auch in Anlage am Ansatzpunkt der Behälterschulter 7 an den Hauptkörper 14 ist eine Zwischenwand 1 in Gestalt eines aus einem lösungsmittelunempfindlichen Material wie Polypropylen bestehenden Einsatzteils von hinten her in den Hauptkörper bis in Anlage an den Ansatz der Behälterschulter 7 eingeschoben. Die Zwischenwand 1 unterteilt den Behälterraum in eine Vorratskammer 24, welche im wesentlichen dem Innenraum des Hauptkörpers 14 entspricht, und in eine Vorkammer 26, die hinten von der Zwischenwand 1 und vorne von der Entnahmeöffnung 22 begrenzt ist.

Um den die Zwischenwand 1 bildenden Tubeneinsatz ohne Beschädigung der Tube 6 in dieser einzubringen, erfolgt das Einführen des Tubeneinsatzes in den hinten noch geöffneten Hauptkörper 14 in einer Schräglage zur jeweiligen Tubendurchmesserebene. Der Tubeneinsatz wird erst am konischen Übergangsstück 16 eben an den Übergang des Hauptkörpers 14 in die vom konischen Übergangsstück 16 gebildete Behälterschulter 7 angedrückt und in der dabei erfolgenden ebenen Ausrichtung mit der stirnseitigen Querschnittsfläche des Hauptkörpers 14 dichtfest mit der Tube 6 verbunden.

Die Zwischenwand 1 weist mindestens eine Ventilöffnung 4 auf, die sich bei Druckbeaufschlagung der Zwischenwand 1 von seiten der Vorratskammer öffnet und sich bei Druckentlastung selbsttätig wieder schließt. Dieser Steuerdruck auf die jeweilige Ventilöffnung 4 wird von dem in der Vorratskammer 24 enthaltenen fluiden Füllgut ausgeübt, wenn zur Entnahme des Füllgutes Quetschdruck von außen auf den Hauptkörper 14 ausgeübt wird. Auch dann, wenn der Hauptkörper 14 in zusammengequetschtem Zustand verbleibt, baut sich der Öffnungsdruck auf die Ventilöffnung 4 wieder ab, sobald hinreichende Menge an Füllgut durch die jeweilige Ventilöffnung 4 zur Entnahme von Füllgut aus der Entnahmeöffnung 22 in die Vorratskammer 24 übergetreten ist. Die jeweilige Ventilöffnung 4 wirkt somit als vorzugsweise ganz oder doch jedenfalls merklich sich selbst in die Schließstellung rückstellendes Rückschlagventil.

Bei allen dargestellten Ausführungsformen ist dabei die Ventilöffnung 4 innerhalb eines zentralen elastisch-nachgiebigen Membranbereiches 3 der Zwischenwand 1 jeweils als Ventilschlitz ausgebildet. Bei relativ weichem Membranabschnitt 3 kann der Schlitz relativ kurz, bei relativ hartem Membranabschnitt 3 soll er etwas länger sein. Die Schlitzlänge hängt auch davon ab, ob das fluide Füllgut dünn- oder dickflüssig ist. Bei wie Wasser dünnflüssigem Füllgut kommt man mit Schlitzlängen von 2 bis 3 mm aus; bei dickflüssigerem Füllgut werden zweckmäßig längere Ventilschlitze gewählt. Wie noch weiter dargelegt wird, soll dabei die Schlitzführung und sonstige Schlitzanordnung so gewählt werden, daß ein klappenartiges Öffnen eines Randbereiches des Ventilschlitzes, oder beider Randbereiche, möglichst vermieden wird. Aus ähnlichen Überlegungen sollte auch allgemein die Länge des Ventilschlitzes nicht zu groß werden. Wenn man dann z.B. den Ventilschlitz längs einer stark gekrümmten oder langen schwächer gekrümmten Kurve verlaufen läßt, ist eine Klappenfunktion des den inneren Schlitzrand bildenden Membranbereiches praktisch kaum zu vermeiden. Diese Überlegungen bezüglich bevorzugter Ventilschlitze schließen jedoch nicht aus, daß die Zwischenwand auch mit anderen bekannten Ausbildungen einer Ventilöffnung, oder mehreren derselben, versehen ist.

Die gesamte Zwischenwand 1 ist zweckmäßig aus demselben Kunststoff einstückig hergestellt. Einzelne radial aufeinander folgende Abschnitte weisen dabei so unterschiedliche Materialstärken und/oder Formgebungen auf, daß sie in unterschiedlichem Maße elastisch-nachgiebig sind.

Die radial innerste Zone bildet dabei der Membranabschnitt 3, der wenigstens im wesentlichen und möglichst ganz spannungslos von einer ihn am äußeren Umfang umgebenden Fassung 2 aufgespannt ist. Der äußere Umfang des Membranabschnittes 3 ist dabei zweckmäßig kreisförmig, kann aber auch, z.B. bei abgeflachten Hauptkörpern 14, eine andere Umrißlinie bilden, z.B. mit Abflachung wie der Hauptkörper oder auch in anderer Gestalt als der Hauptkörper nach durch die Aufspannung bestimmten Überlegungen. Im Grenzfall braucht die Einfassung auch nicht gänzlich um den Membranabschnitt herum zu verlaufen.

Im Falle aller Ausführungsbeispiele ist die Fassung 2 als mit der Achse 18 koaxialer Zylinder gebildet, an dessen der Vorratskammer 24 zugewandten Stirnseite der Membranabschnitt 3 aufgespannt ist. Wie man an den Darstellungen und insbesondere an Fig. 6 erkennt, braucht dabei die Wandstärke des Zylinders 2 gar nicht größer als die des Membranabschnittes 3 zu sein, da die Zylinderform der Fassung zusätzliche Formsteife verleiht.

Das dem Membranabschnitt 3 abgewandte vordere Stirnende des Zylinders 2 ragt bis in die stirnseitige vordere Querschnittsfläche des Hauptkörpers 14. Von dort erstreckt sich radial nach außen ein als Halteteil dienender Ringkragen 5. Dieser Ringkragen 5 ist so weit in radialer Richtung elastisch-nachgiebig, daß er auch bei Toleranzen des vom Halteteil eingenommenen Innenquerschnittsbereich der Tube 6 sich stets elastisch-nachgiebig an die Behälterinnenwand, hier des Hauptkörpers 14, andrücken kann. Zugleich vermag diese elastische Nachgiebigkeit in radialer Richtung auch Durchmessertoleranzen des die Zwischenwand 1 bildenden Einsatzkörpers selbst auszugleichen. Die Abdichtung erfolgt daher auch bei relativ großen Toleranzen stets unter hinreichend abdichtendem Reibungsfluß zwischen Halteteil und Behälterinnenwand.

Der Zylinder 2 hat zweckmäßig einen Außendurchmesser, der etwa Dreiviertel des Durchmessers des Hauptkörpers 14 ausmacht. Die restliche radiale Erstreckung der Zwischenwand wird von dem Halteteil 5 eingenommen. Wie mehr im einzelnen aus Fig. 6 hervorgeht, ist zweckmäßig auch die axiale Länge des Zylinders 2 etwa gleich der radialen Erstreckung des Halteteils 5. Der jeweilige Ventilschlitz 4 verläuft bei allen dargestellten Ausführungsformen als mit der Achse 18 koaxialer Kreisbogen parallel zur Mantelfläche des Zylinders 2 im Nachbarschaftsbereich von dessen Innenfläche. Dadurch verläuft auch jeder dargestellte Ventilschlitz 4 streng senkrecht zu den Radien r des jeweiligen Membranabschnitts 3 bzw. der ganzen Zwischenwand 1.

Diese Anordnung des jeweiligen Ventilschlitzes 4 hat zur Folge, daß bei Druckbeaufschlagung der Zwischenwand 1 von seiten der Vorratskammer 24 aus der Rand des Ventilschlitzes 4 auf seiten der Fassung 2 relativ zu dieser ganz oder im wesentlichen ortsfest stehen bleibt, während der mit dem zentralen Bereich des Membranabschnittes 2 verbundene Rand des Ventilschlitzes sich ventilschiebeartig etwas längs der Achse 18 verschiebt, und zwar unter elastisch-nachgiebiger Verformung der Umfangszone des Membranabschnittes in Verlängerung des jeweiligen Ventilschlitzes. Wegen der nur geringen Krümmung des jeweiligen Ventilschlitzes 4 und auch nur dessen relativ geringer Länge kann es dabei nicht zu einer nennenswerten Ausklappung des radial inneren Randbereichs des Ventilschlitzes um die Sehne kommen, welche die beiden Enden des jeweiligen Ventilschlitzes miteinander verbindet. Es versteht sich, daß man in nicht dargestellter Abwandlung ähnliche Effekte beispielsweise auch dann erzielen kann, wenn ein kurzer Ventilschlitz gerade ausgebildet ist und dabei rechtwinklig auf dem seine Länge halbierenden Mittelradius des Membranabschnittes steht. Weitere äquivalente Konfigurationen sind denkbar, beispielsweise mit geradem Ventilschlitz und in dessen Bereich paralleler gerader Ausbildung der Fassung 2.

Der den Halteteil bildende Ringkragen 5 weist allgemein eine Ringscheibe 28 auf, die von der der Vorkammer 26 zugewandten Stirnseite des Zylinders 2 ausgeht und an ihrem radialen Außenrand in einen sich längs des Zylinders 2 rückerstreckenden Halteflansch 30 übergeht.

Während die bisher erörterten Merkmale allen dargestellten Ausführungsbeispielen gemeinsam sind, unterscheiden sich diese in folgendem:

Gemäß den Figuren 1 bis 3 hängt der zweckmäßig als flache Zylinderscheibe ausgebildete Zentralabschnitt 3 mit der der Vorratskammer zugewandten Stirnseite des Zylinders 2 nur um einen kurzen Umfangsbereich zu beiden Seiten eines einzigen Ventilschlitzes 4 mit dem Zylinder direkt zusammen und ist über den Rest seines Umfangs mit dem zur Vorratskammer 24 weisenden Ende des Zylinders 2 über eine balgförmige Ausformung 12 verbunden. Ein kurzes direktes Verbindungsstück 32 zwischen dem Membranabschnitt 3 und dem Zylinder dient dabei als Scharnier, um das der selbst im ganzen klappenartige Membranabschnitt unter elastischer Verformung der in Richtung zur Vorkammer 26 ausgestülpten balgförmigen Ausformung klappbar ist. In der nicht mit Druck beaufschlagten Normalstellung befindet sich dann der Membranabschnitt in der in Fig. 1 und Fig. 2 ausgezogen und schraffiert gezeigten Stellung, während er bei Druckbeaufschlagung von seiten der Vorratskammer 24 her unter Öffnung des Ventilschlitzes 4 in die in Fig. 2 als Phantomzeichnung dargestellte Lage klappbar ist, in der die der Vorratskammer 24 zugewandte Seite des Membranabschnittes 3 bis in die der Vorratskammer 24 zugewandte stirnseitige Querschnittsfläche des Zylinders 2 klappbar ist. Es ist dabei nicht erforderlich, daß diese als Phantomzeichnung dargestellte Stellung unbedingt erreicht wird; wesentlich ist die durch eine entsprechende Kippbewegung erfolgende Aufspreizung des Ventilschlitzes 4 ohne Wegklappen eines Ventilschlitzrandes. Da in der balgförmigen Ausformung 12 eine relativ große Rückstellkraft gespeichert werden kann, sorgt dies zugleich für ein sicheres Schließen des Ventilschlitzes 4 nach Druckentlastung. Hierdurch wird ein besonders gutes Rückfederungsvermögen der als selbsttätiges Rückschlagventil wirkenden Ventilanordnung erreicht. Es versteht sich, daß dabei auch manche Abwandlungen der beschriebenen Ausführungsform möglich sind, wie beispielsweise anderer Umriß oder andere Profilierung des Membranabschnittes 3 oder auch die Anordnung mehrerer Ventilöffnungen im Scharnierbereich.

Bei dieser Ausführungsform gemäß den Fig. 1 bis 3 folgt die Öffnungsbewegung des Ventilschlitzes 4 eher nach Art eines Ventilschiebers als im Sinne einer solchen Klappenbewegung, bei der ein Rand des Ventilschlitzes seinerseits um eine Kippachse innerhalb der von dem Membranabschnitt 3 gebildeten Gegendruckmembran aufklappt.

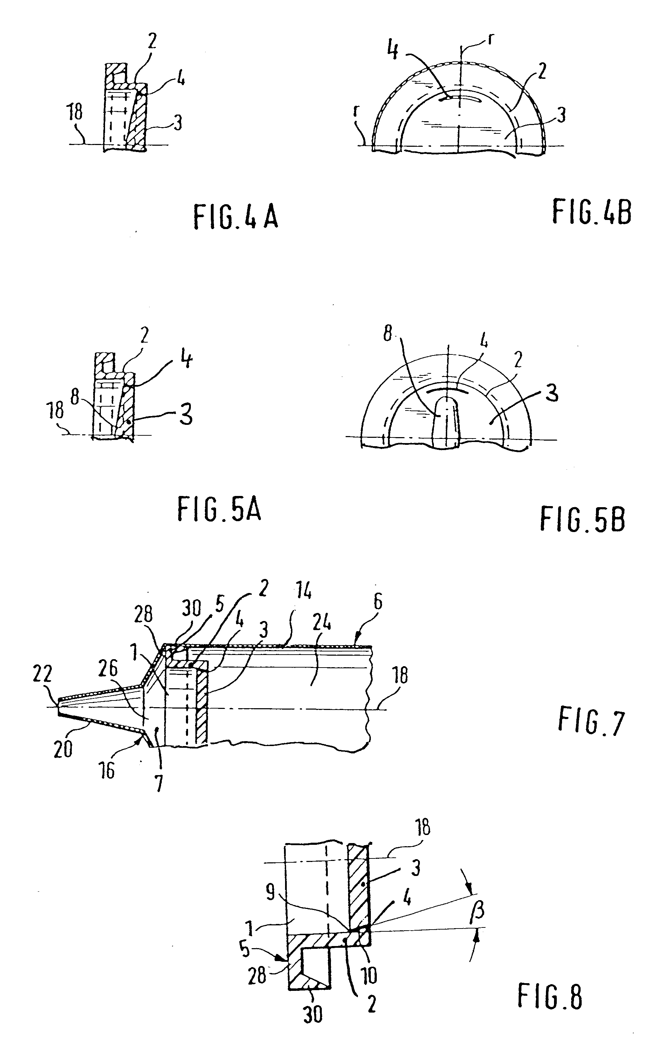

Wie die Fig. 4A, 5A und 6 zeigen, kann die der Vorkammer 26 zugewandte Stirnseite des Membranabschnitts 3 zu dessen Zentrum hin verstärkt ausgebildet sein. Bei den dargestellten Ausführungsbeispielen verläuft dabei die Verstärkungskontur längs eines flachen Konus, welcher den zentralen Punkt des Membranabschnittes 3 im Verhältnis zu dessen Randabschnitt um etwa das Zwei- bis Dreifache, vorzugsweise etwa 1,5-fache, verstärkt. Diese Verstärkung kann dabei entweder gemäß Fig. 4A winkelinvariant oder gemäß den Fig. 5A und 5B nur an einer oder mehreren Verstärkungs- oder Versteifungsrippe(n) 8 ausgebildet sein. Im Falle der Anordnung einer solchen Rippe 8 ist es zweckmäßig, daß diese sich von der Achse 18 aus zum jeweiligen Ventilschlitz 4 hin erstreckt und dabei symmetrisch zu dessen Mittelradius angeordnet ist.

Die Verstärkung kann dabei bereits an der Innenfläche des Zylinders 2 beginnen, wie dies die Fig. 4A und 4B zeigen; sie kann aber auch erst radial weiter innen beginnen, und zwar u.U. erst mit etwas radialem Abstand radial weiter innen als der jeweilige Ventilschlitz 4, wie dies die in Fig. 5B dargestellte Modifikation zeigt. Zweckmäßig ist dabei die Vermeidung scharfer Kanten oder Ecken im Begrenzungsbereich der Rippen, so daß eine längs des Radius langgestreckte oval begrenzte Rippenausbildung gemäß Fig. 5B zweckmäßig ist.

Es ist möglich, daß nur ein einziger Ventilschlitz 4 vorgesehen ist, wie dies die Ausführungsform gemäß den Fig. 1 bis 3 zeigt. Es können aber auch zwei, drei oder vier Ventilschlitze 4 vorgesehen sein; auch eine größere Anzahl von Ventilschlitzen ist möglich. Dabei hängt die Zahl der zweckmäßig zu verwendenden Ventilschlitze 4 von dem Maß der gewünschten Rückstellkraft ab, welche in dem zu den Ventilschlitzen 4 komplementären Umfangsbereich des Membranabschnitts von dessen Material ausgeübt wird.

Bei den Ausführungsformen der Fig. 1 bis 6 hat der jeweilige Ventilschlitz 4 noch einen geringen radialen Abstand relativ zur Innenfläche des Zylinders 2. Dieser Abstand ist klein, vorzugsweise sehr klein, im Verhältnis zum Radius des Membranabschnitts 3. Wie dargestellt, kann dabei dieser Abstand etwa um eine Großenordnung kleiner als der Radius des Membranabschnittes 3 sein. realistische Werte sind das etwa 0,1- bis 0,2-fache, beispielsweise, wie dargestellt, das 0,15-fache. Vorzugsweise fällt jedoch gemäß Fig. 7 und 8 der Ventilschlitz 4 sogar ganz oder im wesentlichen mit der Innenfläche des Zylinders 2 zusammen. Zusätzlich ist noch die besonders vorteilhafte Besonderheit gezeigt, daß die Schnittflächen 10 der Ventilschlitze 4 einen geraden Neigungswinkel $\beta$ zeigen, derart, daß die Schnittfläche 10 an ihrem der Vorkammer 26 zugewandten Ende 9 mit dem Innenrand bzw. der inneren Mantelfläche des Zylinders 2 zusammenfällt und sich in Richtung zur Vorratskammer 24 hin konisch auf die Achse 18 zu erstreckt. Dies ist in den Fig. 7 und 8 anhand eines Membranabschnittes 3 konstanter Dicke ohne Beschränkung der Allgemeinheit dargestellt, so daß eine entsprechende Konfiguration auch mit verstärkten Membranabschnitten, etwa solchen der Fig. 4A und 5A sowie 5B oder anderen, kombiniert sein kann. Es versteht sich auch, daß diese schräge Schlitzführung nicht auf diametral gegenüberliegende Ventilschlitze 4 beschränkt ist.

In Fig. 8 ist der Neigungswinkel $\beta$ relativ zur Innenfläche des Zylinders 2 gemessen. Verlängert man die Schnittfläche 10 in Richtung zur Vorratskammer so weit, daß ein Schnitt mit der Achse 18 erfolgt, so ist dort der Schnittwinkel 90°-$\beta$. $\beta$ selbst ist ein spitzer Winkel von zweckmäßig mehr als 10° und weniger als 40°, vorzugsweise etwa 30°.

Das Halteteil 5 weist bei allen dargestellten Ausführungsformen mit Ausnahme der von Fig. 6 eine Ringscheibe 28 auf, die in der der Vorkammer 26 zugewandten stirnseitigen Querschnittsfläche des Zylinders 2 und damit eben verläuft. Der sich von der Schulter 6 weg erstreckende Halteflansch 30, der mit seiner äußeren Mantelfläche an der Innenfläche des Hauptkörpers 14 reibschlüssig anliegt, hat etwa die halbe axiale Länge wie der Zylinder 2, mindestens eine solche Länge, die eine zuverlässige Halterung und Dichtung ergibt. Der Halteflansch 30 kann dabei ungefähr dreieckigen spitzen (Fig. 2, 7 und 8) oder stumpfen (Fig. 4A und 5A) Querschnitt haben, wobei die Basis des Dreiecks dem Zylinder 2 zugewandt ist, eine Dreieckseite an der Innenwand des Behälters anliegt und die andere Dreieckseite mit der der Schulter 7 zugewandten Seite der Ringscheibe 28 zusammenfällt.

Eine andere Ausbildung des Halteteils 5 zeigt Fig. 6. Bei dieser Ausführungsform ist die der Behälterschulter 7 zugewandte Seite der Ringscheibe unter dem Winkel $\alpha$ abgeschrägt, so daß die ganze Seite des die Zwischenwand 1 bildenden Einsatzteils zur satten Anlage an der entsprechend geneigten Behälterschulter 7 kommen kann. Da die der Vorratskammer 24 zugewandte Seite der Ringscheibe 28 weiterhin radial verläuft, ergibt sich an der Ansatzstelle des Halteflansches 30 eine Ringzone 34 schmalster Stärke, von der aus der wiederum spitz dreieckförmig gebildete Halteflansch 30 ausgeht. Hierdurch kann man besonders gut die toleranzenausgleichende Elastizität des Halteteils 5 unter gleichzeitiger sicherer Anlage des Einsatzteils an der Behälterschulter gewinnen.

In Fig. 6 sind einige charakteristische Maße eines solchen die Zwischenwand 1 bildenden Einsatzteils angegeben:

- Innendurchmesser $d_1$ des Zylinders 2 = 19,5 mm;
- Außendurchmesser $d_2$ des Zylinders 2 = 20,5 mm;
- Durchmesser $d_3$ der Ringzone 34 = 22,0 mm;
- Außendurchmesser $d_4$ der Ringscheibe 28 = 24,5 mm;
- Außendurchmesser $d_5$ der zur Vorratskammer 24 weisenden Kante des

$$\text{Halteflansches } 30 = 24{,}8^{+0,1}_{-0} \text{ mm};$$

- Stärke h 1 des Membranabschnittes 3 in seinem schwächsten Bereich = 0,4 mm;
- Stärke h 2 des Membranabschnittes 3 in seinem stärksten Bereich = 1,0 mm;
- Höhe h 3 der mit der Innenfläche des Hauptkörpers 14 in reibschlüssigem Eingriff stehenden äußeren Mantelfläche des Halteflansches 30 = 3,0 mm;
- Höhe h 4 des Zylinders 2 zwischen seinen beiden Stirnflächen = 4,7 mm;
- Schrägungswinkel $\alpha$ der der Behälterschulter 7 zugewandten Seite der Ringscheibe 28 entsprechend der Schrägung der Behälterschulter 7 selbst = 27°.

Der in Fig. 6 dargestellte Einsatzteil ist das noch nicht geschlitzte Rohteil, zweckmäßig aus Weich-Polypropylen. An den leicht unterschiedlichen Maßen $d_4$ und $d_5$ in Verbindung mit der elastisch-nachgiebigen Materialeigenschaft erkennt man den toleranzausgleichenden Effekt des Halteteils 5 ohne Beeinträchtigung der konstant vorgegebenen Einspannbedingungen des Membranabschnittes 3 in der vom Zylinder 2 gebildeten Fassung.

Man erkennt ferner, daß die innere Übergangsfläche der Ringscheibe 28 in den Halteflansch 30 unter Bildung der ringförmigen geschwächten Zone 34 auf der der Vorratskammer 24 zugewandten Seite von radial innen nach radial außen geknickt verläuft. Der Halteflansch erstreckt sich hierbei bis in die der Vorratskammer 24 zugewandte Ebene des Membranabschnitts 3.

## Patentansprüche

1. Auslaufsperre für Behälter (6), insbesondere für Tuben, mit einer den Behälterraum unterteilenden Zwischenwand (1), die eine mit einer Entnahmeöffnung (22) des Behälters (6) kommunizierende Vorkammer (26) von einer Vorratskammer (24) abteilt, in der das Füllgut abwechselnd zur Entnahme druckbelastbar und danach wieder druckentlastbar ist, wobei die Zwischenwand einen Membranabschnitt (3) mit mindestens einer schlitzförmigen Ventilöffnung (4) bildet, die sich bei Druckbeaufschlagung des Membranabschnitts von seiten der Vorratskammer gegen eine von der Membranspannung ausgeübte Rückstellkraft öffnet und sich bei Druckentlastung unter der Rückstellkraft selbsttätig wieder schließt,

wobei die Zwischenwand einen Halteteil (5) bildet, der unter Ausgleich von Toleranzen mit dem Behälter verbunden oder verbindbar ist,

und wobei die Zwischenwand (1) eine relativ formstabile Fassung (2) ihres Membranabschnitts (3) bildet, welche den Membranabschnitt (3) weitgehend unabhängig vom Verbindungszustand von Halteteil (5) und Behälter (6) aufspannt und vom Halteteil (5) getragen ist,

dadurch **gekennzeichnet,** daß mindestens ein, vorzugsweise mehrere, periphere(r) Ventilschlitz(e) (4) längs der Fassung (2) verläuft bzw. verlaufen, daß der Membranabschnitt (3) nur längs eines relativ kurzen Umfangsabschnitts direkt mit der Fassung (2) und über den übrigen Umfang mit einer balgförmigen Anformung der Fassung verbunden ist, und daß der Ventilschlitz (4) oder mehrere Ventilschlitze nur in dem Bereich direkter Verbindung des Membranabschnitts (3) mit der Fassung (2) angeordnet ist bzw. sind.

2. Auslaufsperre nach Anspruch 1, dadurch gekennzeichnet, daß die Fassung (2) ringförmig ausgebildet ist.

3. Auslaufsperre nach Anspruch 2, dadurch gekennzeichnet, daß die Fassung als Zylinder (2) ausgebildet ist.

4. Auslaufsperre nach einem der Ansprüche 1 bis 3, dadurch gekennzeichnet, daß der Membranabschnitt (3) an einer Stirnseite der langgestreckt ausgebildeten Fassung (2) angeordnet ist.

5. Auslaufsperre nach Anspruch 4 mit Anordnung der Zwischenwand (1) an einer Behälterschulter (7), dadurch gekennzeichnet, daß die mit dem Membranabschnitt (3) versehene Stirnseite der Fassung (2) der Behälterschulter (7) abgewandt ist.

6. Auslaufsperre nach einem der Ansprüche 1 bis 5, dadurch gekennzeichnet, daß der Halteteil (5) als Ringkragen ausgebildet ist.

7. Auslaufsperre nach Anspruch 6, dadurch gekennzeichnet, daß der Ringkragen (5) eine Ringscheibe (28) mit einem abgewinkelten Halteflansch (30) aufweist.

8. Auslaufsperre nach Anspruch 7, dadurch gekennzeichnet, daß die der Vorkammer (26) zugewandte Fläche der Ringscheibe (28) in Anpassung an eine schräge Behälterschulter (7) schräg ausgebildet ist.

9. Auslaufsperre nach Anspruch 7 oder 8, dadurch gekennzeichnet, daß der Halteflansch (30) von einer Behälterschulter (7) fort weist.

10. Auslaufsperre nach einem der Ansprüche 7 bis 9, dadurch gekennzeichnet, daß die innere Übergangsfläche der Ringscheibe (28) in den Halteflansch (30) unter Bildung einer ringförmigen geschwächten Zone (34) von radial innen nach radial außen geknickt verläuft.

11. Auslaufsperre nach einem der Ansprüche 1 bis 10, dadurch gekennzeichnet, daß der jeweilige Ventilschlitz (4) rechtwinklig zum Radius (r) des Membranabschnittes (3) verläuft.

12. Auslaufsperre nach Anspruch 11, dadurch gekennzeichnet, daß der Membranabschnitt (3) jeweils eine gegen den Ventilschlitz (4) auslaufende Versteifungsrippe (8) bildet.

13. Auslaufsperre nach Anspruch 12, dadurch gekennzeichnet, daß die Versteifungsrippe(n) (8) radial verläuft bzw. verlaufen.

14. Auslaufsperre nach einem der Ansprüche 1 bis 13, dadurch gekennzeichnet, daß der Membranabschnitt (3) zu seinem Zentrum hin verstärkt ausgebildet ist.

15. Auslaufsperre nach den Ansprüchen 13 und 14, dadurch gekennzeichnet, daß die Verstärkung durch mindestens eine Versteifungsrippe (8) gebildet ist.

16. Auslaufsperre nach einem der Ansprüche 13 bis 15, dadurch gekennzeichnet, daß die Versteifungsrippe(n) (8) und/oder die Verstärkung auf der der Vorratskammer abgewandten Seite des Membranabschnittes (3) ausgebildet ist bzw. sind.

17. Auslaufsperre nach einem der Ansprüche 1 bis 16, dadurch gekennzeichnet, daß der Außenrand des Ventilschlitzes oder der Ventilschlitze (4) am Innenrand (9) der Fassung (2) angeordnet ist.

18. Auslaufsperre nach einem der Ansprüche 1 bis 17, dadurch gekennzeichnet, daß die Schnittfläche (10) des Ventilschlitzes oder der Ventilschlitze (4) schräg (Neigungswinkel 90°-$\beta$) zur Achse (18) der Fassung (2) verläuft.

19. Auslaufsperre nach Anspruch 18, dadurch gekennzeichnet, daß der jeweilige Ventilschlitz (4) an der der Vorkammer (26) zugewandten Seite des Membranabschnittes (3) achsferner als an der der Vorratskammer (26) zugewandten Seite des Membranabschnittes (3) angeordnet ist.

20. Anwendung einer Auslaufsperre nach einem der Ansprüche 1 bis 19 für Klebstoffbehälter.

21. Anwendung einer Auslaufsperre nach einem der Ansprüche 1 bis 19 für Shampoonbehälter.

22. Anwendung einer Auslaufsperre nach einem der Ansprüche 1 bis 19 für Zahncremebehälter.

## Claims

1. Discharge shutoff device for containers (6), in particular for tubes, having a partition (1) which subdivides the container space and separates a front chamber (26) communicating with a removal opening (22) of the container (6) from a supply chamber (24) in which the contents can alternately be charged with pressure for removal and then relieved from pressure again, the partition forming a membrane portion (3) having at least one slot-type valve opening (4) which opens under the application of pressure on the membrane portion by the supply chamber counter to a restoring force exerted by the membrane tension and closes again automatically under the restoring force when the pressure is relieved, the partition forming a holding part (5) which, whilst compensating for tolerances, is connected or can be connected to the container, and the partition (1) forming a dimensionally relatively stable mounting (2) of its membrane portion (3), which mounting tensions the membrane portion (3) largely independently of the connection state of the holding part (5) and the container (6) and is supported by the holding part (5), characterised in that at least one peripheral valve slot (4), preferably a plurality of peripheral valve slots (4), runs or run along the mounting (2), in that the membrane portion (3) is connected directly to the mounting (2) only along a relatively short portion of the periphery and, over the remaining periphery, is connected to a bellows-type shaping on the mounting, and in that the valve slot (4) or plurality of valve slots is or are arranged only in the region of direct connection of the membrane portion (3) with the mounting (2).

2. Discharge shutoff device according to Claim 1, characterised in that the mounting (2) is of annular construction.

3. Discharge shutoff device according to Claim 2, characterised in that the mounting is constructed as a cylinder (2).

4. Discharge shutoff device according to one of Claims 1 to 3, characterised in that the membrane portion (3) is arranged on an end side of the mounting (2) of elongate construction.

5. Discharge shutoff device according to Claim 4, with arrangement of the partition (1) on a container shoulder (7), characterised in that the end side of the mounting (2) provided with the membrane portion (3) is averted from the container shoulder (7).

6. Discharge shutoff device according to one of Claims 1 to 5, characterised in that the holding part (5) is constructed as an annular collar.

7. Discharge shutoff device according to Claim 6, characterised in that the annular collar (5) has an annular disk (28) with an angled holding flange (30).

**8.** Discharge shutoff device according to Claim 7, characterised in that the surface of the annular disk (28) facing the front chamber (26) is of sloping construction to match a sloping container shoulder (7).

**9.** Discharge shutoff device according to Claim 7 or 8, characterised in that the holding flange (30) points away from a container shoulder (7).

**10.** Discharge shutoff device according to one of Claims 7 to 9, characterised in that the inner transition surface of the annular disk (28) into the holding flange (30) runs in a bent manner from radially inwards to radially outwards, forming an annular weakened zone (34).

**11.** Discharge shutoff device according to one of Claims 1 to 10, characterised in that the respective valve slot (4) runs perpendicular to the radius (r) of the membrane portion (3).

**12.** Discharge shutoff device according to Claim 11, characterised in that the membrane portion (3) forms a stiffening rib (8) ending in each case towards the valve slot (4).

**13.** Discharge shutoff device according to Claim 12, characterised in that the stiffening rib(s) (8) runs or run radially.

**14.** Discharge shutoff device according to Claims 1 to 13, characterised in that the membrane portion (3) is constructed to be reinforced towards its centre.

**15.** Discharge shutoff device according to Claims 13 and 14, characterised in that the reinforcement is formed by at least one stiffening rib (8).

**16.** Discharge shutoff device according to one of Claims 13 to 15, characterised in that the stiffening rib(s) (8) and/or the reinforcement is or are constructed on the side of the membrane portion (3) averted from the supply chamber.

**17.** Discharge shutoff device according to one of Claims 1 to 16, characterised in that the outer edge of the valve slot or the valve slots (4) is arranged on the inner edge (9) of the mounting (2).

**18.** Discharge shutoff device according to one of Claims 1 to 17, characterised in that the cut edge (10) of the valve slot or the valve slots (4) runs obliquely (angle of inclination $90° - \beta$) relative to the axis (18) of the mounting (2).

**19.** Discharge shutoff device according to Claim 18, characterised in that the respective valve slot (4) is arranged further away from the axis on the side of the membrane portion (3) facing the front chamber (26) than on the side of the membrane portion (3) facing the supply chamber (24).

**20.** Use of a discharge shutoff device according to one of Claims 1 to 19, for glue containers.

**21.** Use of a discharge shutoff device according to one of Claims 1 to 19, for shampoo containers.

**22.** Use of a discharge shutoff device according to one of Claims 1 to 19 for toothpaste containers.

**Revendications**

**1.** Obturateur d'écoulement pour récipients (6), notamment pour tubes, comportant une cloison (1) qui subdivise l'espace intérieur du récipient en séparant une préchambre (26) en communication avec une ouverture de soutirage (22) du récipient (6), d'une chambre de réserve (24) dans laquelle le produit de remplissage peut alternativement être sollicité en pression pour le soutirage, puis à nouveau être détendu,
la cloison formant un tronçon de membrane (3) comportant au moins une ouverture de soupape (4) en forme de fente, qui s'ouvre lors de la sollicitation en pression du tronçon de membrane à partir du côté de la chambre de réserve, à l'encontre d'une force de rappel exercée par la tension de la membrane, et qui lors de la détente se referme à nouveau automatiquement sous l'effet de la force de rappel,
la cloison formant une partie de maintien (5) reliée ou susceptible d'être reliée au récipient en assurant

EP 0 306 665 B1

la compensation des tolérances,
et la cloison (1) formant une douille de support (2), de forme relativement stable, de son tronçon de membrane (3), qui assure la suspension du tronçon de membrane (3) de manière largement indépendante de l'état de liaison entre la partie de maintien (5) et le récipient (6), et qui est portée par la partie de maintien (5),
caractérisé en ce qu'au moins une, et de préférence plusieurs, fente()s de soupape périphérique(s) (4) s'étend(ent) le long de la douille de support (2), en ce que le tronçon de membrane (3) n'est relié directement à la douille de support (2) que le long d'un secteur périphérique relativement court, et est relié le long du restant de la périphérie, à une partie en forme de soufflet formée sur la douille de support, et en ce que la fente de soupape (4), ou plusieurs fentes de soupape, est ou sont disposée(s) uniquement dans la zone de la liaison directe entre le tronçon de membrane (3) et la douille de support (2).

2. Obturateur d'écoulement selon la revendication 1, caractérisé en ce que la douille de support (2) est de forme annulaire.

3. Obturateur d'écoulement selon la revendication 2, caractérisé en ce que la douille de support est réalisée en forme de cylindre (2).

4. Obturateur d'écoulement selon l'une des revendications 1 à 3, caractérisé en ce que le tronçon de membrane (3) est disposé sur un côté frontal de la douille de support (2) de forme allongée.

5. Obturateur d'écoulement selon la revendication 4, avec disposition de la cloison (1) contre un épaulement (7) du récipient, caractérisé en ce que le côté frontal de la douille de support (2) pourvu du tronçon de membrane (3), est éloigné de l'épaulement (7) du récipient.

6. Obturateur d'écoulement selon l'une des revendications 1 à 5, caractérisée en ce que la partie de maintien (5) est réalisée sous la forme d'un collet annulaire.

7. Obturateur d'écoulement selon la revendication 6, caractérisé en ce que le collet annulaire (5) comporte un disque annulaire (28) présentant un flasque de maintien (30) coudé.

8. Obturateur d'écoulement selon la revendication 7, caractérisé en ce que la face du disque annulaire (28), dirigée vers la préchambre (26), présente une inclinaison pour s'adapter à un épaulement (7) incliné du récipient.

9. Obturateur d'écoulement selon les revendications 7 ou 8, caractérisé en ce que le flasque de maintien (30) s'éloigne d'un épaulement (7) du récipient.

10. Obturateur d'écoulement selon l'une des revendications 7 à 9, caractérisé en ce que la surface intérieure de transition du disque annulaire (28) au flasque de maintien (30) s'étend de manière coudée, radialement de l'intérieur vers radialement l'extérieur, en formant une zone annulaire (34) affaiblie.

11. Obturateur d'écoulement selon l'une des revendications 1 à 10, caractérisé en ce que chaque fente de soupape (4) s'étend perpendiculairement au rayon (r) correspondant du tronçon de membrane (3).

12. Obturateur d'écoulement selon la revendication 11, caractérisé en ce que le tronçon de membrane (3) forme une nervure de renfort (8) se terminant vers chaque fente de soupape (4).

13. Obturateur d'écoulement selon la revendication 12, caractérisé en ce que la ou les nervure(s) de renfort (8) s'étend(ent) radialement.

14. Obturateur d'écoulement selon l'une des revendications 1 à 13, caractérisé en ce que le tronçon de membrane (3) est réalisé de manière renforcé en direction de son centre.

15. Obturateur d'écoulement selon les revendications 13 et 14, caractérisé en ce que le renforcement est réalisé par au moins une nervure de renfort (8).

14

16. Obturateur d'écoulement selon l'une des revendications 13 à 15, caractérisé en ce que la ou les nervure(s) de renfort (8) et/ou le renforcement est ou sont réalisé(s) sur le côté du tronçon de membrane opposé à celui dirigé vers la chambre de réserve.

17. Obturateur d'écoulement selon l'une des revendications 1 à 16, caractérisé en ce que le bord extérieur de la ou des fente(s) de soupape (4) est agencé sur le bord intérieur (9) de la douille de support (2).

18. Obturateur d'écoulement selon l'une des revendications 1 à 17, caractérisé en ce que la surface en coupe (10) de la ou des fente(s) de soupape (4) s'étend de manière inclinée (angle d'inclinaison 90° - $\beta$) par rapport à l'axe (18) de la douille de support (2).

19. Obturateur d'écoulement selon la revendication 18, caractérisé en ce que chaque fente de soupape (4) est agencée à une distance plus grande de l'axe sur le côté du tronçon de membrane (3) dirigé vers la préchambre (26), que sur le côté du tronçon de membrane (3) dirigé vers la chambre de réserve (24).

20. Application d'un obturateur d'écoulement selon l'une des revendications 1 à 19 à des récipients de colle.

21. Application d'un obturateur d'écoulement selon l'une des revendications 1 à 19 à des récipients de shampooing.

22. Application d'un obturateur d'écoulement selon l'une des revendications 1 à 19 à des récipients de dentifrice.

FIG.6

FIG.1

FIG.2

FIG.3

FIG.4 A

FIG.4B

FIG.5A

FIG.5B

FIG.7

FIG.8